# FASCICULE DE BREVET EUROPEEN

(11) **EP 1 009 103 B1**
(45) Date de publication et mention de la délivrance du brevet: **14.12.2005**
(21) Numéro de dépôt: 99402545.0
(22) Date de dépôt: 15.10.1999
(51) Int. Cl.: H04B 1/38, H04H 1/00

(54) **Réseau téléphonique local comportant des combinés téléphoniques gérés par une station de base comportant un récepteur de programmes de radiodiffusion**
Lokales Telefonnetz mit Telefonhörern die von einer Basisstation bedient werden, wo in der Basisstation auch ein Rundfunkempfänger eingebaut ist
Local telephone network comprising telephone handsets controlled by a base station which comprises a broadcast receiver

(30) Priorité: 23.10.1998 FR 9813320
(43) Date de publication de la demande: 14.06.2000
(73) Titulaire: Sagem SA, 75116 Paris (FR)
(72) Inventeur: Auffray, Jean-Paul, 95800 Cergy Saint Christophe (FR)
(74) Mandataire: Bloch, Gérard

(56) Documents cités:
- WO-A-96/39753
- DE-A- 19 605 019
- JP-A- 8 125 723
- US-A- 5 541 980
- US-A- 5 574 964

## Description

La présente invention concerne le domaine de la téléphonie chez l'abonné et plus précisément des installations téléphoniques comportant une base téléphonique reliée au réseau téléphonique et desservant une pluralité de combinés téléphoniques d'un réseau local, par exemple un réseau domotique sans fil. L'abonné peut ainsi communiquer vocalement avec le monde extérieur. Il peut aussi recevoir des programmes radiodiffusés s'il dispose d'un récepteur radio de programmes diffusés. Il s'agit donc de deux fonctions séparées, le réseau téléphonique permettant d'acheminer, de façon bidirectionnelle, une communication personnelle jusqu'à l'abonné ou depuis l'abonné alors que la radio concerne des diffusions générales d'informations, se propageant dans un seul sens.

La demanderesse a eu l'idée d'intégrer ces deux fonctions, a priori peu compatibles, dans un matériel commun, globalement plus économique, et c'est ainsi qu'elle présente son invention.

Document US 5 541 980 contient les caractéristiques du préambule de la revendication 1.

A cet effet, l'invention concerne un réseau téléphonique local comportant une pluralité de combinés téléphoniques et une base de gestion des combinés, caractérisé par le fait que la base comporte des moyens de réception de programmes radiodiffusés et des moyens pour les transmettre aux combinés à travers le réseau.

Ainsi, la base sert aussi de tête de réseau réceptrice de programmes radiodiffusés, qui empruntent ensuite des voies téléphoniques pour atteindre les combinés.

Le réseau local comporte une base reliée à la fois au réseau téléphonique public et aux stations de radio et télévision, si bien que l'architecture du réseau local téléphonique convient aussi pour la réémission des programmes radio vers les combinés. Dans le réseau local, cette réémission locale peut emprunter des liaisons sans fil, par exemple au standard radio DECT, ou encore des liaisons filaires.

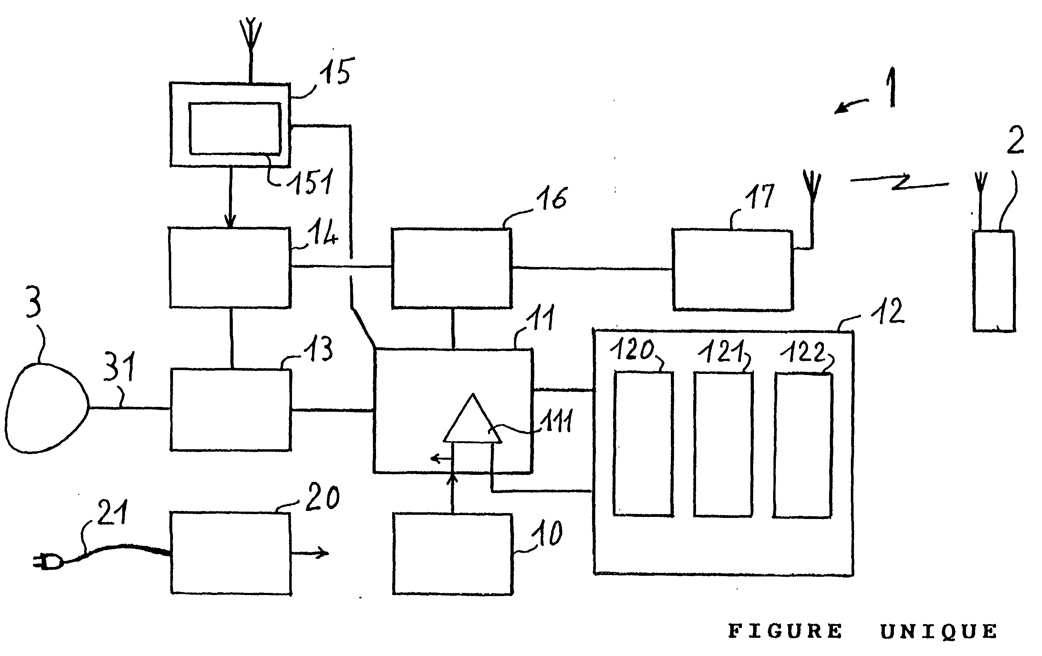

L'invention sera mieux comprise à l'aide de la description suivante d'une forme de réalisation préférée du réseau téléphonique local de l'invention, en référence à la figure unique.

La figure représente un réseau téléphonique local comportant une base 1 et une pluralité de combinés téléphoniques 2, dont un seul est dessiné. Dans cet exemple, il s'agit d'un réseau local radio au standard DECT, dans lequel une trame de voies radio offre une pluralité de voies pour relier un combiné 2 à un autre ou à une liaison téléphonique 31, ici une ligne téléphonique du réseau téléphonique commuté 3.

La base 1 comporte des circuits d'horloge 10 rythmant le fonctionnement d'une unité centrale à microprocesseur 11 qui est reliée aux divers circuits de la base 1 pour gérer celle-ci.

Un circuit d'interface ligne 13, relié à la ligne 31, assure la protection voulue ainsi que les échanges phoniques et de signalisations. Il est relié, par une liaison de signaux phoniques, à un circuit 14 de commutation de liaisons phoniques relié par ailleurs en sortie d'un récepteur de programmes radiodiffusés 15, comportant un circuit d'accord 151 commandé par l'unité centrale 11. Le circuit de commutation 14 est relié à un circuit 16 de gestion des voies DECT, relié à un émetteur-récepteur radio 17, de liaison avec les combinés 2.

Une mémoire 12 de programmation du récepteur 15 et du circuit de commutation 14 en sortie de celui-ci avec le circuit 16, personnalisée pour chaque combiné 2, contient une table comportant, pour chaque combiné 2, trois zones mémoires associées. Une première zone 120 contient les divers numéros de combinés 2, une deuxième zone 121 contient, en correspondance avec chaque numéro de la zone 121, une fréquence de réception de station de radiodiffusion de programmes, et/ou le nom de station, choisie par l'utilisateur du combiné 2 considéré, et une troisième zone 122 contient un calendrier d'activation des circuits 15, 14, 16, 17, pour recevoir et transmettre au combiné 2 un programme diffusé, ceci à travers le réseau local. Le calendrier comporte l'heure et la ou les dates ou jours de semaine choisis par l'utilisateur du combiné 2 considéré pour recevoir le programme radio sur son combiné 2. En variante, on peut ne commander que les circuits de transmission 14, 16, 17 à travers le réseau local, pour recevoir un programme quelconque.

Dans l'unité centrale 11, un comparateur 111 reçoit la sortie des circuits d'horloge 10 et la compare au calendrier en zone 122 pour, lorsque l'heure courante a atteint l'une des heures programmées et que le jour courant est prévu dans le calendrier, commander le circuit d'accord 151 du récepteur 15 par la table 121 de fréquences, en ce qui concerne le combiné 2 considéré. Le récepteur 15 dont le circuit 151 est réglé fournit alors au circuit de commutation ou d'aiguillage 14 le programme radio sélectionné par la table de fréquences 121 et l'unité centrale 11 commande le circuit d'aiguillage 14 pour transmettre les signaux de programme radio au circuit 16, qui les insère, après numérisation, dans une voie temporelle à 32 kb/s, adressée au combiné 2 considéré. Celui-ci retransforme, de façon classique, les signaux numériques en signaux analogiques commandant un écouteur/haut-parleur du combiné 2.

Il peut d'ailleurs être prévu deux circuits récepteurs tels que le circuit 15, ou plus, afin de permettre la réception simultanée de deux programmes radio par deux combinés 2. En pareil cas, l'unité centrale 11 gère une table d'utilisation actuelle et prévisionnelle (122) du premier récepteur 15 et utilise en plus ou programme l'utilisation (122) de l'autre ou des autres récepteurs 15 lorsque plus d'un récepteur 15 doit être utilisé à un instant donné, présent ou futur.

L'unité centrale 11 télécommande en outre un circuit d'écoute amplifiée, non représenté, du combiné 2, afin que le programme radio puisse faire office de réveil si besoin est. Cette télécommande est transmise par un canal de signalisation des voies DECT et commande un microprocesseur du combiné 2, qui lui-même commande un amplificateur à gain programmable. Le microphone du combiné 2 peut, à cette occasion, être mis hors service pour éviter un accrochage phonique.

Le récepteur 15 peut avoir une antenne spécifique, comme représenté, ou bien utiliser comme antenne le fil de ligne téléphonique 31, par couplage électro-magnétique, ou encore un cordon d'alimentation en énergie secteur 21 d'une alimentation 20 de la base 1.

En pareil cas, il peut être prévu un circuit de sélection d'antenne dans l'unité centrale 11 ou bien intégré au récepteur 15, comportant deux circuits de réception et mémorisation des signaux radio reçus par l'une et l'autre des antennes 21, 31. Ce circuit, branché en sortie du circuit 15, mesure alternativement le niveau de signal reçu par l'une et l'autre des antennes 21 et 31 et commande un circuit d'aiguillage à deux voies, dans le circuit 15, pour relier la meilleure des antennes 21 et 31, permettant d'obtenir le signal de niveau le plus élevé, à l'entrée du circuit 15. Ce circuit compare ainsi les efficacités des antennes 21, 31 et choisit la meilleure en la reliant au circuit 15.

La programmation ou écriture de la table 12 s'effectue à partir du clavier (non représenté) de chaque combiné 2. L'utilisateur transmet, à l'unité centrale 11, une commande spécifique d'accès à la table 12 et en reçoit en retour, sur un écran, un menu lui présentant les différentes zones ou champs 121, 122 de sélection de fréquence et d'heure et date ou jour de semaine. L'unité centrale 11 met alors à jour la table 12 en fonction des commandes qu'elle reçoit du clavier du combiné 2.

Pour un appel entrant provenant de la ligne 31, l'unité centrale 11, qui gère les diverses communications du réseau local et a en mémoire les identités des combinés 2 en communication, relie la ligne 31 à la sortie du récepteur 15 lorsque le combiné 2 appelé est occupé, ceci par commande du circuit de connexion 14. L'appelant reçoit donc une "musique" d'attente consistant en un programme radio déterminé par la table 12. Un combiné 2 maître gère la base 1 à cet effet et gère aussi les droits, de programmation de la table 12, accordés à chaque combiné 2.

D'une façon générale, la base 1 peut aussi recevoir des signaux audiovisuels diffusés et en exploiter le signal sonore.

Afin de sélectionner la fréquence qui convient, pour recevoir les émissions d'une station de tête réémises par des répéteurs à diverses fréquences répartis sur un territoire étendu et couvrant chacun une zone géographique déterminée, l'unité centrale 11 est agencée pour recevoir, par la ligne 31, des informations de serveurs reliés au réseau RTC 3 et indiquant, pour la zone considérée, les fréquences des répéteurs locaux des diverses stations de tête. Le circuit 151 de récepteur 15 est ainsi réglé automatiquement sur la fréquence de chaque répéteur local de station de tête, mémorisé dans la table 12, l'utilisateur d'un combiné 2 choisissant ainsi un nom de station de tête, sans se préoccuper de la fréquence de réception.

## Revendications

1. Réseau téléphonique local comportant une pluralité de combinés téléphoniques (2) et une base (1) de gestion des combinés (2), qui comporte des moyens (15) de réception de programmes radiodiffusés et des moyens (11, 14, 16, 17) pour les transmettre aux combinés (2) à travers le réseau **caractérisé par le fait que** la base (2) comporte des moyens (11, 12) de sélection de fréquence de réception desdits programmes radio diffusés commandés par les combinés (2).

2. Réseau selon la revendication 1, dans lequel la base (1) comporte une table (12) de programmation des moyens de réception (15) et des moyens de transmission (14, 16), associée à des moyens (11) d'écriture de la table (12) à partir des combinés (2).

3. Réseau selon la revendication 2, dans lequel la table (12) comporte des moyens (121) de mémorisation d'une fréquence de réception, agencés pour commander des circuits (151) d'accord de fréquence des moyens de réception (15).

4. Réseau selon l'une des revendications 2 et 3, dans lequel la table (12) comporte des moyens (122) de mémorisation d'un calendrier d'activation des moyens de transmission (14, 16), agencés pour commander ceux-ci à travers des moyens comparateurs (111) recevant un signal de temps d'une horloge (10).

5. Réseau selon l'une des revendications 1 à 4, dans lequel la base (1) est agencée pour télécommander des circuits d'écoute amplifiée dans les combinés (2) lorsqu'elle leur transmet un programme.

6. Réseau selon l'une des revendications 1 à 5, dans lequel un cordon d'alimentation en énergie (21) de la base (1) sert d'antenne aux moyens de réception (15).

7. Réseau selon l'une des revendications 1 à 6, dans lequel un fil de ligne (31) de liaison téléphonique de la base (1) sert d'antenne aux moyens de réception (15).

8. Réseau selon les revendications 6 et 7, dans lequel il est prévu un circuit (11) de sélection d'antenne, agencé pour comparer les efficacités de l'antenne fil de ligne (31) et de l'antenne cordon (21) et pour relier la meilleure des antennes (21, 31) aux moyens de réception (15).

9. Réseau selon l'une des revendications 3 à 8, dans lequel la base (1) comporte des moyens (11, 13) de réception téléphonique de signaux de sélection de fréquence de réémetteurs radio, agencés pour commander les circuit d'accord (151) des moyens de réception (15).

10. Réseau selon l'une des revendications 1 à 9, dans lequel la base (1) comporte des moyens (11, 13, 14) de mise en attente d'un appel entrant, agencés pour se relier à la sortie des moyens de réception radio (15).

## Patentansprüche

1. Lokales Telefonnetz mit mehreren Telefonhandgeräten (2) und einer Basis (1) zur Verwaltung der Handgeräte (2), die Empfangseinrichtungen (15) für gesendete Programme und Einrichtungen (11, 14, 16, 17) umfasst, um sie über das Netz an die Handgeräte (2) zu übertragen,
**dadurch gekennzeichnet, dass**
die Basis (2) Einrichtungen (11, 12) zur Empfangsfrequenzauswahl der gesendeten Programme umfasst, die von den Handgeräten (2) gesteuert werden.

2. Netz nach Anspruch 1 ,
wobei die Basis (1) eine Programmiertabelle (12) für die Empfangseinrichtungen (15) und Übertragungseinrichtungen (14, 16) umfasst, die den Einrichtungen (11) zum Erstellen der Tabelle (12) ausgehend von den Handgeräten (2) zugeordnet sind.

3. Netz nach Anspruch 2,
wobei die Tabelle (12) Speichereinrichtungen (121) für eine Empfangsfrequenz umfasst, die dazu eingerichtet sind, Frequenzabstimmungsschaltkreise (151) der Empfangseinrichtungen (15) zu steuern.

4. Netz nach einem der Ansprüche 2 und 3,
wobei die Tabelle (12) Speichereinrichtungen (122) für einen Betätigungszeitplan der Übertragungseinrichtungen (14, 16) umfasst, die dazu eingerichtet sind, diese über Vergleichseinrichtungen (111) zu steuern, die ein Zeitsignal eines Taktgebers (10) empfangen.

5. Netz nach einem der Ansprüche 1 bis 4,
wobei die Basis (1) dazu eingerichtet ist, Schaltkreise zum verstärkten Abhören in den Handgeräten (2) mit Fernwirkung anzusteuern, wenn sie ein Programm an sie überträgt.

6. Netz nach einem der Ansprüche 1 bis 5,
wobei eine Energieversorgungslitze (21) der Basis (1) den Empfangseinrichtungen (15) als Antenne dient.

7. Netz nach einem der Ansprüche 1 bis 6, wobei ein Leitungsdraht (31) zur Telefonverbindung der Basis (1) den Empfangseinrichtungen (15) als Antenne dient.

8. Netz nach den Ansprüchen 6 und 7,
wobei eine Antennenwahlschaltung (11) vorgesehen ist, die dazu eingerichtet ist, die Wirkungsgrade der Leitungsdrahtantennen (31) und der Litzenantenne (21) zu vergleichen, um die bessere der Antennen (21, 31) mit den Empfangseinrichtungen (15) zu verbinden.

9. Netz nach einem der Ansprüche 3 bis 8,
wobei die Basis (1) Telefonempfangseinrichtungen (11, 13) für Frequenzauswahlsignale von hunkumsetzern umfasst, die dazu eingerichtet sind, die Abstimmschaltkreise (151) der Empfangseinrichtungen (15) zu steuern.

10. Netz nach einem der Ansprüche 1 bis 9,
wobei die Basis (1) Wartestellungseinrichtungen (11, 13, 14) für einen eingehenden Anruf umfasst, die dazu eingerichtet sind, sich mit dem Ausgang der Funkempfangseinrichtungen (15) zu verbinden.

## Claims

1. Local telephone network comprising a plurality of telephone handsets (2) and a base station (1) for managing the handsets (2), which includes means (15) for receiving broadcast programmes and means (11, 14, 16, 17) for transmitting them to the handsets (2) through the network, **characterised in that** the base station (1) comprises means (11, 12) for selecting the reception frequency of said broadcast programmes, these means being controlled by the handsets (2).

2. Network according to claim 1, wherein the base station (1) includes a table (12) for programming the reception means (15) and the transmission means (14, 16), said table being associated with means (11) for writing the table (12) from the handsets (2).

3. Network according to claim 2, wherein the table (12) includes means (121) for memorising a reception frequency, said means being arranged to control frequency tuning circuits (151) of the reception means (15).

4. Network according to one of claims 2 and 3, wherein the table (12) includes means (122) for memorising a timetable for activating the transmission means (14, 16), arranged to control the latter through comparator means (111) receiving a time signal from a clock (10).

5. Network according to one of claims 1 to 4, wherein the base station (1) is arranged to remotely control amplified reception circuits in the handsets (2) when it sends them a programme.

6. Network according to one of claims 1 to 5, wherein a power cable (21) of the base station (1) serves as an antenna for the reception means (15).

7. Network according to one of claims 1 to 6, wherein a telephone link line wire (31) of the base station (1) serves as an antenna for the reception means (15).

8. Network according to claims 6 and 7, wherein an antenna selection circuit (11) is provided which is arranged to compare the efficiency of the line wire antenna (31) and the cable antenna (21) and to connect the better of the antennae (21, 31) to the reception means (15).

9. Network according to one of claims 3 to 8, wherein the base station (1) includes means (11, 13) for the telephonic reception of frequency selection signals of radio re-broadcasting transmitters, arranged to control the tuning circuits (151) of the reception means (15).

10. Network according to one of claims 1 to 9, wherein the base station (1) includes means (11, 13, 14) for putting an incoming call on hold, said means being arranged to link up with the output of the radio reception means (15).
